# EUROPEAN PATENT SPECIFICATION

(11) **EP 1 893 979 B1**
(45) Date of publication and mention of the grant of the patent: **10.08.2011**
(21) Application number: 06773730.4
(22) Date of filing: 22.06.2006
(51) Int. Cl.: G01N 21/75

(54) **MOLECULARLY IMPRINTED POLYMER AND USE THEREOF IN DIAGNOSTIC DEVICES**
MOLEKULAR GEPRÄGTE POLYMERE UND IHRE VERWENDUNG BEI DIAGNOSEVORRICHTUNGEN
POLYMERE A EMPREINTE MOLECULAIRE ET SON UTILISATION DANS DES DISPOSITIFS DE DIAGNOSTIC

(30) Priority: 22.06.2005 US 692559 P
(43) Date of publication of application: 05.03.2008
(73) Proprietor: ADHESIVES RESEARCH, INC., Glen Rock, PA 17327 (US)
(72) Inventor: MEATHREL, William, York, Pennsylvania 17404 (US); WAGNER, Benjamin, Red Lion, Pennsylvania 17356 (US)
(74) Representative: Stones, James Alexander
(86) International application number: PCT/US2006/024219
(87) International publication number: WO 2007/002237

(56) References cited:
- US-A1- 2003 027 354
- US-A1- 2003 049 173

## Description

### BACKGROUND OF THE PRESENT INVENTION

The present invention is directed to molecularly imprinted polymers, and the use thereof in diagnostic devices for the analysis of target molecules.

Molecular recognition is critical for the functioning of biological systems. Biological systems depend on molecular recognition to perform specific functions. Molecular recognition systems such as enzyme-substrate interactions, antibody-antigen interactions, DNA replication and cellular replication are examples of biological systems dependent on specific molecular interactions. Biomolecules such as enzymes and antibodies are used in in-vitro diagnostic devices to detect and quantify a specific target molecule which is indicative of a specific disease or biological function. For example, the enzyme glucose oxidase is used in diagnostic test strips to quantify the concentration of glucose in biological fluid such as blood, serum and interstitial fluid. Glucose oxidase reacts specifically with glucose. Diabetics routinely use glucose test strips to monitor the glucose level in their blood.

Molecularly imprinted polymers (MIPs) are synthetic compounds created with receptor sites that exhibit selectivity to a target compound. The synthesis of a polymer with the functionality to recognize a specific target molecule enables the polymer to capture and to concentrate the target molecule. Alternatively, a molecularly imprinted polymer containing target molecules can be made to controllably release these molecules from the polymer network.

Applications for molecularly imprinted polymers include: chromatographic adsorbents, membranes, sensors and drug delivery systems. (references: Molecular Imprinting at the edge of the Third Millennium, Sergey A. Piletsky et al., Trends in Biotechnology, vol 19(1), pages 9-12, January 2001. and "Polymers and Gels as Molecular Recognition Agents", Nicholas A. Peppas and Yanbin Huang, Pharmaceutical Research, vol. 19(5), pages 578-587, May 2002; "Molecular Imprinting Science and Technology: A Survey of the Literature for the Years up to and including 2003", Alexander et al, Journal of Molecular Recognition, 2006, Vol. 19, pp 106-180.

The synthesis of molecularly imprinted polymers involves the polymerization and cross-linking of functional monomers in the presence of a template molecule to capture the imprint of the template. The template molecules may be extracted from the polymer to create 3-dimensional sites within the polymer matrix with functional groups that are complementary to those of the template molecule. (Reference, "Molecular Imprinting: State of the Art and Perspectives", Jean Daniel Marty and Monique Mauzac, Advances in Polymer Science, vol. 172 pages 1-35, 2005.)

Highly cross-linked polymer networks are rigid structures that can exhibit high specificity to the target molecule. This high specificity make these rigid polymers ideal for analytical methods and separation techniques that require an exact complementary match of molecular functional groups and the position and orientation of the groups on a target molecule. Consequently, molecularly imprinted polymers may be used as chromatographic column packing used to separate enantiomers from racemic mixtures.

Rigid MIPs have the advantage of being highly specific to a single target molecule. They have the disadvantage that it is difficult to extract the template molecule from the highly cross-linked polymer network due to strong complementary interactions between the polymer and the target molecules. In addition, the complementary functionality and orientation requirements reduce the rate of reaction or the time for the template molecule to be adsorbed at the imprinted site. Reducing the cross-link density of a MIP reduces the specificity of the capture sites. However, the rate of template capture is increased.

Many patents and articles describe the use of specific polymer-biomolecule molecule interactions in biosensors. Per Bjork et al in Biosensors & Bioelectronics 20 (2005) pages 1764-1771 describes a biosensor based on the electrostatic and hydrogen bonding interaction between polythiophene and oligonucleotides. US patent publication No. 2004/0053425 describes an on-chip assay based on molecular recognition between a peptide or protein and a monoclonal antibody. These applications are based on molecular recognition rather than a molecularly imprinted polymer.

US patent No. 6,638,498 by Green et al describes MIPs to bind and remove toxins from the gastrointestinal tract.

Chin-Shiou Huang in US patent No. 6,680,210 teaches techniques for making polymers that imprint for macromolecules. The MIPs may be used for detecting and quantifying the amount of each macromolecule in a complex biological source.

US patent No. 6,762,025, assigned to Molecular Machines, Inc. teaches the use of oligonucleotides for molecular recognition.

US patent No. 6,807,842 describes a molecular recognition sensor for detecting an analyte using a semiconductive polymer film. The polymer film is imprinted with the analyte and the resistance of the film changes when exposed to the analyte and interferents.

US patent No. 6,582,971 by Singh et al describes a method for molecular imprinting polymers with large biomolecules such as proteins. Using biphasic polymerization, a target biomolecule is molecularly imprinted in the polymer at the interface between an aqueous and an organic phase.

US patent No. 6,461,873 by Catonia et al describes a caffeine detector that uses at least two molecularly imprinted polymers in first and second zones on a paper strip. The MIP in the first zone removes substances that may interfere with the analysis of caffeine. The second zone is coated with a MIP that selectively adsorbs caffeine and chromogenic reagents that provide colorimetric quantification of caffeine.

### SUMMARY OF THE INVENTION

A polymer with molecularly imprinted sites can be formulated into an adhesive. The molecularly imprinted adhesive may be used in in-vitro diagnostic devices to concentrate a target analyte in a sensing area. In addition, a molecularly imprinted adhesive may be used to extract or bind interfering compounds from fluids where they contact the adhesive and remove these compounds in a biosensor. By concentrating an analyte in the sensing area or by removing interfering compounds the accuracy, sensitivity and detection level of the device can be improved.

Alternatively, an adhesive that is made using a polymer that has been synthesized to imprint for a specific molecule may controllably release the target molecule as required. For example, an adhesive imprinted with a surfactant may retain the surfactant in the adhesive network and then release the surfactant in a diagnostic device to reduce the surface tension of fluids. Surfactant imprinted adhesives may be used in lateral flow devices to reduce the surface tension of biological fluids such as blood and sputum to increase flow rates and reduce sensor response time.

Further, the present invention comprises a method of conducting an analysis of a liquid sample containing a component to be analyzed as to identity and/or amount comprising contacting said liquid sample with an adhesive comprised of a cross-linked polymer having been imprinted with said component, and conducting said analysis based on the amount of said component absorbed by said polymer having previously been imprinted with said component.

### BRIEF DESCRIPTION OF THE DRAWINGS

Figure 1a is a top view of a lateral flow diagnostic device;
Figure 1b is a schematic diagram of the lateral flow diagnostic device of Figure 1a;
Figure 2 depicts a microfluidic device used in in-vitro sample analysis;
Figure 3 is a side view of a lateral flow diagnostic device of the present invention;
Figure 4 is a top view of the lateral flow diagnostic device of Figure 3;
Figure 5 is an exploded view of a lateral flow diagnostic test strip of the present invention;
Figure 6 is an exploded view of another embodiment of a lateral flow test strip of the present invention;
Figure 7 is a view in perspective of a microfluidic diagnostic device according to the present invention;
Figure 8 is a cross-sectional view of the device of Figure 7;
Figure 9 is a view in perspective of another embodiment of a microfluidic device having an adhesive spacer portion attached to a base portion;
Figure 10 is a view in cross-section of the microfluidic device of Figure 9 wherein both base portions are present;
Figure 11 is a view in perspective of a micro plate without a cover sheet; and
Figure 12 is a view in perspective of the micro plate of Figure 9 with a cover sheet.
Figure 13 is a top view of an open well microplate having a multitude of holes therein.
Figure 14 is a view in cross-section of the open well microplate of Figure 13.
Figure 15 is a graphical depiction of the effect on determined glucose concentration using a MIP imprinted for uric acid and ascorbic acid.
Figure 16 is a graphical depiction of the effect on determined glucose concentration using 5% by weight of MIPs imprinted for uric acid and ascorbic acid in the bulk of a pressure sensitive adhesive.
Figure 17 is a graphical depiction of the effect on determined glucose concentration using 5% by weight of MIPs imprinted for uric acid and ascorbic acid on the surface of a pressure sensitive adhesive.

### DETAILED DESCRIPTION OF THE PRESENT INVENTION

The present invention is directed to adhesives containing at least one molecularly imprinted polymer (MIP). A molecularly imprinted polymer is a cross-linked polymer created with a specific molecular recognition site. The molecular recognition site is complementary to the shape and functionality of a target or receptor molecule.

The present invention is based on the combined effect of the use of a target molecule, functional monomers in the polymer which are complementary to the target molecule, and the use of a cross-linking agent.

The target molecule may be an analyte, an interferent compound, or a compound to be collected. In addition, the molecularly imprinted polymer of the present invention may be used to enable chemical release of an imprinted component (such as an antimicrobial compound), or drug delivery by means of rate programming (diffusion), activated release, or regulated release. The MIP may be used to collect a target molecule, or release a target molecule.

During formation of the MIP, functional monomers are polymerized and cross-linked in the presence of a template molecule to produce a molecularly imprinted resin.

Advantageously, the polymer resin may be comprised of one or more of the following functional monomers: acrylic acid, methacrylic acid, trifluoro-methacrylic acid, 4-vinylbenzoic acid, itaconic acid, 1-vinylimidazole, 2-vinylpyridine, 4-vinylpyridine, 4(5)-vinylimidazole, 4-vinylbenzyl-iminodiacetic acid, and 2-acrylamido-2-methyl-1-propane sulphonic acid. This listing of functional monomers is not intended to be exhaustive, and other functional monomers can be employed as deemed appropriate. The selection of suitable functional monomers is well within the skill of the routineer in the art.

Other exemplary monomers that may be employed include but are not limited to hydroxyl ethyl methacrylate, 1-vinylimidazole, vinyl acetic acid, acrylamide, and diacetone acrylamide.

A cross-linking agent is also employed in order to control the morphology of the polymer matrix, stabilize the binding site, provide mechanical stability, and is generally present in an amount of from 25-90% by weight based on the total weight of the reactants used to form the polymer.

Exemplary cross-linking agents include but are not limited to 4-divinylbenzene, N,N'-methylene-bisacrylamide, N,N'-phenylene-bisacrylamide, 2,6-bisacrylamidopyridine, ethylene glycol dimethacrylate, poly(ethylene glycol) dimethacrylate, and trimethylolpropane trimethacrylate.

Such monomers can be employed to yield polymers such as poly(hydroxyethylmethacrylate); poly(acrylic acid); poly(methacrylic acid); polypyrrole; copolymers of vinyl acetic acid, acrylamide, and allyl benzene; poly(4-vinyl pyridine); polystyrene-co-acrylamide; copolymer of acrylamide and 4-vinylpyridine.

The polymer reactants and cross-linking agent may be combined together in the presence of a solvent or porogen. The solvent or porogen brings all reactants together during polymerization, is responsible for creating pores in the polymer (either gel-type polymers which may be amorphous or glassy), macroporous or microgel particles. Typical solvents include but are not limited to acetonitrile or water.

Solvent-based or water-based initiators may also be employed to enhance the polymerization of the reactants. A suitable solvent-based initiator is azobis-isobutyronitrile, and a water-based initiator is 2,2'-azobis-cyanovaleric acid.

The resin is used to formulate an adhesive that may be coated onto various carrier films. The template molecule may be retained in the resin, allowing the template molecule to be controllably released from the adhesive. Alternatively, the template molecule may be extracted from the resin prior to formulation into an adhesive.

Adhesives may be formulated to contain multiple molecularly imprinted polymers. An adhesive containing multiple MIPs can be made to extract different template molecules (e.g" interferents) from a fluid as the interferents in the fluid contact the adhesive surface.

The MIP compositions of the present invention may be used in a variety of different ways. The MIP composition, once formed, can be ground to the size of a powder. The MIP powder can then be admixed into an adhesive composition to form an adhesive having uniformly dispersed therein the MIP component. The MIP powder may also be applied to the surface of an adhesive layer, blended into an adhesive solution either as solids or in the form of a solvated mixture of solvent/solids, suspended in a solution (either dissolved or not), and cast or spray coated onto an adhesive surface.

Different MIP compositions may be blended in the presence of a suitable solvent, and then cast or otherwise formed into a solid. The solid can then be ground into a suitable particle size. The polymer can also be polymerized in the presence of two or more molecules.

Alternatively, assuming that the resulting imprinted polymer is sufficiently soft to serve as a pressure sensitive adhesive, the molecularly imprinted polymer may itself constitute the adhesive layer.

The identity of the adhesive component with which the MIP may be blended is not critical. A variety of adhesives such as heat sealable adhesives and pressure sensitive adhesives may be employed, the identity of which is known to those of ordinary skill in the art.

For instance, a variety of adhesives including but not limited to polyvinyl ethers, acrylic adhesives, poly-alpha-olefins, and silicone adhesives, as well as blends thereof may be used. By way of example, polyvinyl ether pressure sensitive adhesives generally comprise blends of vinyl methyl ether, vinyl ethyl ether or vinyl iso-butyl ether, or homopolymers of vinyl ethers and acrylates. Acrylic pressure sensitive adhesives may comprise, for example, a C₃₋₁₂ alkyl ester component and a polar component such as (meth)acrylic acid, N-vinyl pyrrolidone, etc. Such adhesives may be tackified. Poly-alphaolefin adhesives may comprise an optionally cross-linked C₃₋₁₈ poly(alkene) polymer, which is either self-tacky or may include a tackifier. Silicone pressure sensitive adhesives comprise a polymer or gum constituent and a tackifying resin.

More specifically, the acrylic pressure sensitive adhesive is preferably comprised of a polymer formed from the reaction product of at least one acrylate A and a B monomer different from the A monomer.

The at least one A monomer preferably comprises a monomeric (meth)acrylic acid ester of a non-tertiary alcohol where the alcohol portion has from 1 to 30 carbon atoms. Exemplary A monomers include but are not limited to esters of acrylic acid or methacrylic acid with non-tertiary alcohols such as 1-butanol, 1-pentanol, 2-pentanol, 3-pentanol, 2-methyl-1-butanol, 1-methyl-1-pentanol, 2-methyl-1-pentanol, 3-methyl-1-pentanol, 2-ethyl-1-butanol, 3,5,5-trimethyl-1-hexanol, 3-heptanol, 2-octanol, 1-decanol, 1-dodecanol, etc. Such monomers are well-known to those skilled in the art. The least one A monomer component (if more than one A monomer is present) will preferably exhibit an average number of carbon atoms in the alcohol portion of the total acrylic or (meth)acrylic acid esters of from 3 to 16.

One or more polymerizable B monomers different from the A monomer may be incorporated in the polymer which B monomer(s) is copolymerizable with the A monomer. Such additional B monomer(s) may be either hydrophilic or hydrophobic.

Exemplary optional B monomers include vinyl monomers having at least one nitrogen atom. Such monomers (each of which exhibit a Tg of >20 °C.) include but are not limited to N-mono-substituted acrylamides such as acrylamide, methacrylamide, N-methylacrylamide, N-ethylacrylamide, N-methylolacrylamide, N-hydroxyethylacrylamide, and diacetone acrylamide; N,N-disubstituted acrylamides such as N,N-dimethylacrylamide, N,N-diethylacrylamide, N-ethyl-N-aminoethyl acrylamide, N-ethyl-N-hydroxyethylacrylamide, N,N-dimethylolacrylamide, and N,N-dihydroxyethylacrylamide, etc.

Other optional B monomers may include, for example, various vinyl monomers such as (meth)acrylic acid, itaconic acid, crotonic acid, methoxyethyl (meth)acrylate, ethoxyethyl (meth)acrylate, glycerol (meth)acrylate, hydroxyethyl methacrylate, hydroxypropyl methacrylate, beta-carboxyethyl acrylate, vinyl pyrrolidone, vinyl caprolactam and caprolactam acrylate. One or more B monomers may be employed.

Such pressure sensitive adhesives are well known to one of ordinary skill in the art and may be easily selected by such persons for use in the present invention.

Advantageously, such MIPs may be used in diagnostic devices such as lateral flow devices or other types of diagnostic devices as depicted in the Figures as discussed below. It has been found that indigenous interferents present in a fluid which contacts the diagnostic device may interfere with the obtaining of an accurate diagnostic result. For example, as discussed below, the presence of the interferent uric acid and/or ascorbic acid in blood interferes with the obtaining of an accurate determination of the amount of glucose present in the blood. By use of a MIP which has been imprinted with uric acid and/or ascorbic acid, uric acid and/or ascorbic acid can be removed from the fluid during diagnosis, thus enhancing the accuracy of the determination of glucose in the fluid. The same advantage exists with respect to other interferents that may be present.

The target molecule must be non-reactive under the conditions of polymerization employed to form the imprinted polymer. A typical weight ratio of monomer/target molecule is 4:1, although the amount of target molecular which is employed is not critical to practice of the claimed invention.

A method for preparing a molecularly imprinted polymer with glucose recognition sites is described in Hasoo Seong et al. in the Journal Biomaterial Science Polymer Education, Vol. 13(6), pages 637-649 (2002).

A glucose imprinted polymer was synthesized using functional monomers currently used to make pressure sensitive adhesives. Examples 1 - 7 describe various formulations and conditions used to make glucose imprinted MIPs as well as control systems. The cross-linker and cross-linker concentration were selected to control the rigidity of the glucose receptor site.

The present invention is further described in connection with the following Examples, which are to be viewed as being merely illustrative of the invention and not limiting by nature.

Example 1 is a conventional polymer formulation which is made without the presence of a glucose agent, and is made as a control composition.

### Example 1

| 13% solids, DMSO solvent | |
|---|---|
| vinyl acetic acid | 4.89% by wt. |
| acrylamide | 4.03% |
| allyl benzene | 6.71 % |
| 1,4-butanedioldiacrylate | 84.37% |

The above reactants are mixed with 1% by weight of the monomers with the initiator 2,2'-azobis(2,4-dimethylpentanenitrile), and polymerized for 4 hours at 60°C under nitrogen atmosphere.

Example 2 contains the same polymer components as the formulation of Example 1, but also includes a D-glucose component.

### Example 2

| 13% solids, DMSO solvent | |
|---|---|
| vinyl acetic acid | 5.34% by wt. |
| acrylamide | 4.41 % |
| allyl benzene | 7.33% |
| D-glucose | 11.18% |
| 1,4-butanedioldiacrylate | 71.74% |

The above reactants are mixed with 1% by weight of the monomers with the initiator 2,2'-azobis(2,4-dimethylpentanenitrile), and polymerized for 4 hours at 60°C under nitrogen atmosphere.

Upon completion of the polymerization the polymer of Examples 1 and 2 was dried to remove the solvent and then ground into a fine powder.

The polymer powder of Example 2 was washed with water to remove any glucose. After the water wash, the polymers were re-dried. To determine the ability of the imprinted sites to extract and concentrate D-glucose the polymer was exposed to an aqueous solution containing 10% glucose. Thermal gravimetric analysis using a Universal V2.6D from TA instruments was used to measure the shift in polymer thermal stability caused by adsorption of glucose by the polymer. By measuring the shift in the decomposition temperature of the polymer with or without glucose it was found that 70% of the theoretical sites were formed during the polymerization, and 50% of these sites remained viable for entrapment of glucose after glucose removal.

Example 3 is another conventional polymer formulation which is made without the presence of a glucose agent, and is made as a control composition.

### Example 3

| 13% solids, DMSO solvent | |
|---|---|
| vinyl acetic acid | 4.89% by wt. |
| acrylamide | 4.03% |
| allyl benzene | 6.71% |
| N,N-methylene-bis-acrylamide | 84.37% |

The above reactants are mixed with 1% by weight of the monomers with the initiator 2,2'-azobis(2,4-dimethylpentanenitrile), and polymerized for 4 hours at 60°C under nitrogen atmosphere.

Example 4 contains the same polymer components as the formulation of Example 3, but also includes a D-glucose component.

### Example 4

| 13% solids, DMSO solvent | |
|---|---|
| vinyl acetic acid | 5.34% by wt. |
| acrylamide | 4.41% |
| allyl benzene | 7.33% |
| D-glucose | 11.18% |
| N,N-methylene-bis-acrylamide | 71.74% |

The above reactants are mixed with 1% by weight of the monomers with the initiator 2,2'-azobis(2,4-dimethylpentanenitrile), and polymerized for 4 hours at 60°C under nitrogen atmosphere.

As noted above, the polymer synthesized in Example 3 contains no glucose imprinted sites and is used as a control. Example 4 is a similar polymer. However, the polymerization and cross-linking occurs in the presence of glucose as the template molecule.

Thermal gravimetric analysis could not be used for Examples 3 and 4 since the shift in the polymer decomposition was similar to glucose. To measure glucose imprinting in Example 4, a Glucose G2 Autokit Glucose kit was obtained from WAKO Chemicals USA, Inc. This kit employs an enzymatic method using mutarotase and glucose oxidase to generate hydrogen peroxide during the oxidation of glucose. The hydrogen peroxide then induces oxidative condensation between phenol and 4-aminoantipyrine in the presence of peroxidase to create a red color. By measuring the absorbance of the red color the concentration of glucose can be determined.

A washing and drying procedure similar to Examples 1 and 2 was followed. The polymers from Examples 3 and 4 were exposed to a 10% aqueous glucose solution then washed and a sample of the water extracts from the control and imprinted polymers were collected. The water samples were prepared following the glucose kit directions and the absorbance was tested on a Lambda 9000 UV/VIS/NIR spectrophotometer from Perkin Elmer. Using a known concentration standard include in the kit, the glucose concentration in the water samples was determined. This value was related to the theoretical imprinted glucose sites in the polymers. It was calculated that 80% of the theoretical sites were formed during the polymerization for Example 4 and 70% of these sites remained viable for entrapment after glucose removal.

Examples 2 and 4 form rigid to soft polymers that were formulated into an adhesive and coated onto a polyester carrier. The adhesive film was used in a lateral flow device to support a nitrocellulose membrane under a sensing area. The sensing area on the nitrocellulose membrane had been treated with colorimetric reagents which respond to glucose. One drop of a 1 % aqueous glucose solution was passed through the membrane and the color in the sensing area responded within 2 seconds. A similar lateral flow device was constructed without the MIP adhesive using the controls of Examples 1 and 3, and the colorimetric reagents in the sensing area did not respond until 10 seconds.

Example 5 also contains the same polymer components as the formulation of Example 2, but also includes a uric acid component instead of a D-glucose component. Uric acid is a known interferent in glucose determinations as discussed above.

### Example 5

| 13% solids, DMSO solvent | |
|---|---|
| vinyl acetic acid | 5.34% by wt. |
| acrylamide | 4.41% |
| allyl benzene | 7.33% |
| uric acid | 11.18% |
| N,N-methylene-bis-acrylamide | 71.74% |

The above reactants are mixed with 1% by weight of the monomers with the initiator 2,2'-azobis(2,4-dimethylpentanenitrile), and polymerized for 4 hours at 60°C under nitrogen atmosphere.

Example 5 shows a MIP polymer imprinted for uric acid by removal of uric acid from the resulting polymer by exhaustive water washing. Uric acid has been reported to interfere with the response of blood glucose test strips. The uric acid MIP was formulated into an adhesive and the adhesive tape was used as a cover over the blood channel of an Accu-Chek Comfort Curve blood glucose test strip manufactured by Roche Diagnostics Corporation, Indianapolis, IN. A test solution containing 130 mg/decaliter glucose and 8 mg/decaliter uric acid was allowed to wick through the blood channel.

More accurate glucose measurements were obtained when the channel was enclosed by the uric acid imprinted adhesive in comparison to a control test strip which did not contain the MIP adhesive.

Other compounds such as acetaminophen and ascorbic acid are also known to interfere with blood glucose analysis. Other molecules which can be imprinted include but are not limited to caffeine, melatonin, morphine or other drugs of abuse, etc. MIPs similar to Example 5 can be prepared using these interferent compounds as template molecules. For instance, individual polymers for each interferent can be prepared in the same manner noted above. Alternatively, one polymer with imprinted sites for multiple interferent compounds can synthesized by incorporating different interferents in a single reaction batch.

Example 6 contains another conventional solvent-free photocurable pressure sensitive adhesive polymer formulation for use as a control.

### Example 6

| | |
|---|---|
| 2-ethylhexyl acrylate | 56.15%. |
| n-butyl acrylate | 14.99 |
| vinyl acetate | 19.98 |
| acrylic acid | 5.61 |
| polyethylene glycol diacrylate | 2.50 |
| 2-hydroxy-2-methyl-1-phenyl-1-propanone | 0.77 |

The above reactants are mixed with 1% by weight of the monomers with the initiator 2,2'-azobis(2,4-dimethylpentanenitrile), and polymerized for 4 hours at 60°C under nitrogen atmosphere.

Example 7 contains the same polymer components as the formulation of Example 6, but also includes a surfactant component - i.e., Aerosol OT, an anionic surfactant, obtained from Cytec Industries.

### Example 7

| | |
|---|---|
| 2-ethylhexyl acrylate | 55.74 % by wt. |
| n-butyl acrylate | 14.88 |
| vinyl acetate | 19.83 |
| acrylic acid | 5.57 |
| polyethylene glycol diacrylate | 2.48 |
| 2-hydroxy-2-methyl-1-phenyl-1-propanone | 0.76 |
| Aerosol OT | 0.74 |

After free radical photocuring Example 7 produces a hydrophilic pressure sensitive adhesive. The surfactant molecule is used as a template to create imprinted sites within the adhesive matrix. The surfactant molecules may be controllably released from the adhesive during use to reduce the surface tension of fluids that contact the adhesive. Since the surfactant molecules are entrapped within the polymer matrix they are less labile and the adhesive retains its hydrophilic properties even after rinsing the adhesive under flowing tap water.

A pressure sensitive adhesive tape was made by coating the imprinted polymer from Example 7 on a 3 mil polyester film. The surfactant-imprinted tape was used as a cover to enclose fluidic channels molded into a polyethylene substrate. Water flowed through the channels while a similar construction prepared using a pressure sensitive adhesive tape made using the control polymer in Example 6 did not. Water flow through the channels could be repeated multiple times illustrating the retention of the surfactant in the imprinted adhesive polymer.

The molecularly-imprinted polymers of the present invention may be used with advantage with diagnostic devices such as those disclosed in PCT publication WO 02/085185. Such devices include lateral flow devices, micro-fluidic in-vitro diagnostic devices, and in-vitro diagnostic devices comprised of a microplate having a base plate having disposed therein a multitude of microholes or cavities, and at least one cover placed in sealing relationship to said microholes or cavities.

PCT publication WO02/085185 teaches the combination of a surfactant with a polymer composition in order to yield a hydrophilic polymer. However, the noted publication merely teaches the admixing of the surfactant with a solvated polymer. This is in contrast mixing the surfactant with the mixture of monomers which are then copolymerized and crosslinked in the presence of the surfactant to form an imprinted polymer.

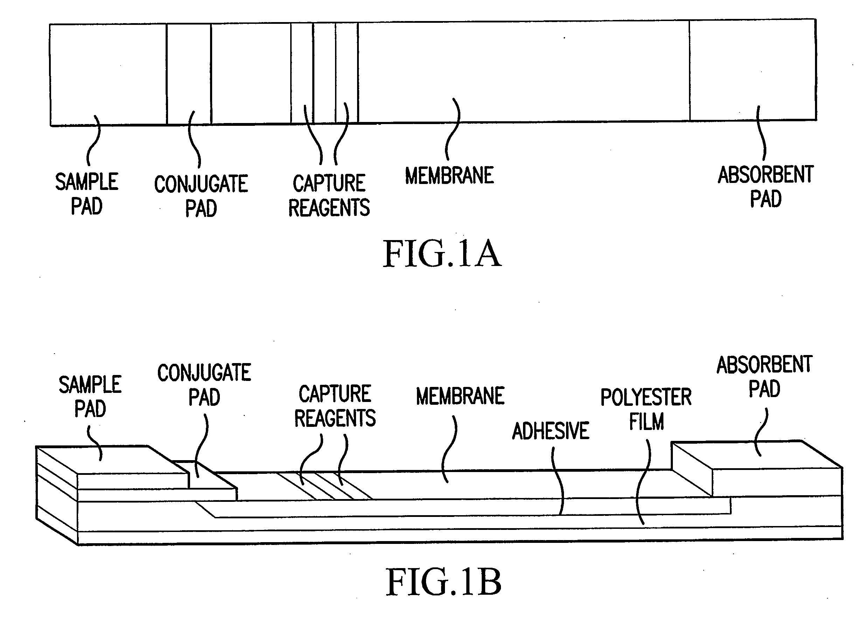

Lateral flow devices as shown in Figures 1A and 1B typically have a sample inlet area for receiving the biological fluid. The sample inlet area or port may be proximal to a conjugate pad that holds reagents specific to the analytical test method. As the sample specimen flows from the inlet area through a reagent area, specific chemical reactions or a complex formation occur. The reaction product or complex continues to flow to a detection area where the analyte is monitored. Specimen fluids may continue to flow and be collected in an absorbent pad. The time required for determining the concentration of a specific analyte is dependent on the flow rate of the fluid and the reaction rate between the analyte and a specific test reagent.

Adhesive backings are typically used in the construction of lateral flow devices to support the various components of the device including the conjugate pad, a microporous membrane with specific reagents and an absorbent pad as shown in Figures 1A and 1B. The adhesive layer may be either pressure sensitive or heat-sealable, and may be present on a backing film such as a polyester film. The flow rate of the sample fluid is typically controlled by capillary flow through the microporous membrane.

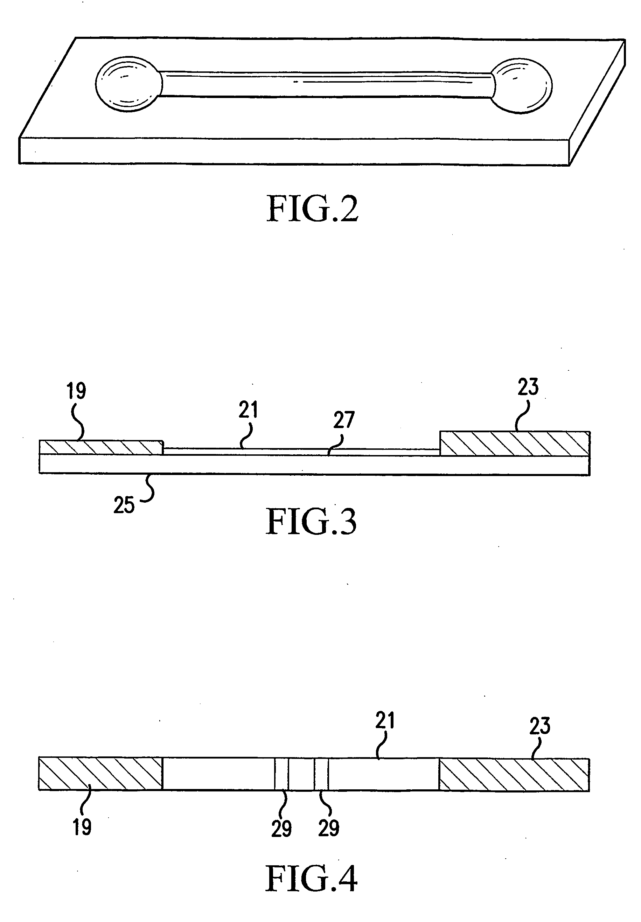

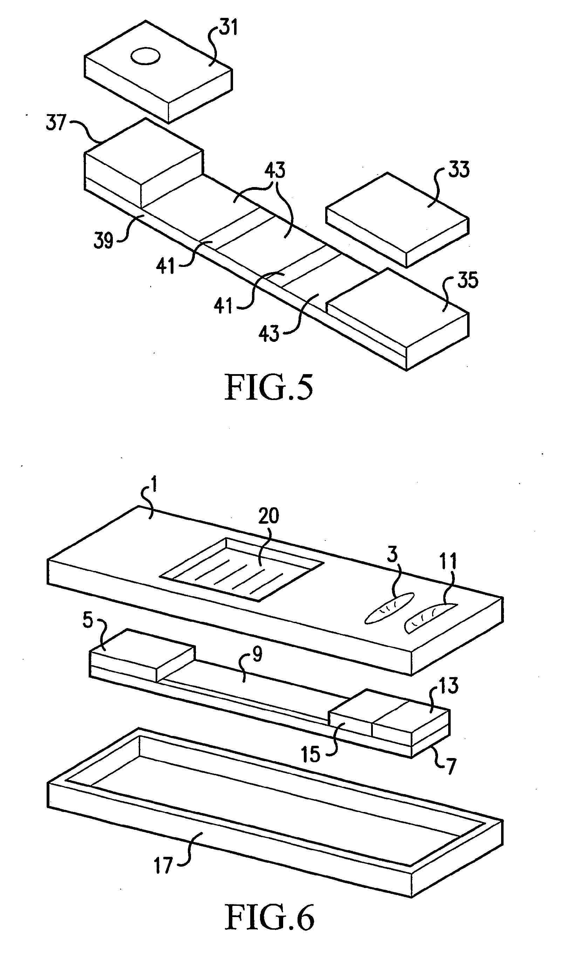

The present invention may be employed with advantage in a variety of in-vitro diagnostic devices, both of the lateral flow and of the capillary flow type, with devices of the lateral flow rate type of Figures 3-8. In one embodiment of a lateral flow device of the present invention as depicted in Figure 6, the device comprises a housing cover 1, means (port) 3 in the housing to introduce a sample to be assayed into the device, means 5 (absorbent pad) for fluid collection, and a backing strip 7 having spaced apart first and second ends. The means for sample fluid collection is adhered to the backing at a first end of the backing strip, the means to introduce the sample is adhered to the backing at the second end of the backing strip. A microporous or porous membrane 9 is optionally placed between the first and second ends to provide an avenue for travel of the sample between the first and second ends as well as to provide a matrix for any reagent material that may be present for contact with the fluid sample, during which time the sample contacts the reagent with which reaction or contact is to occur.

Advantageously, in accordance with the present invention, the backing strip between the first and second ends may be a molecularly imprinted polymer film which may be adhesive by nature. The backing strip 7 may be, e.g., heat-sealable or exhibit pressure sensitive adhesive properties. If the backing strip 7 exhibits pressure sensitive adhesive properties, and is molecularly imprinted with a surfactant, the hydrophilic character of the material serves to avoid reducing the effectiveness of any membrane 9 attached to the backing strip in the event that migration of the adhesive into the membrane occurs.

By way of further advantage, if the backing strip is imprinted with a surfactant, it may be possible to avoid use of the membrane 9, instead relying solely on the hydrophilic character of the backing strip itself to wick the sample from the sample introduction point to the sample collection point. In such an embodiment, the reagent with which the sample must contact or react with will either be applied directly to the backing strip for contact with the sample, or be introduced to the surface of the backing strip from a reservoir attached to the backing strip in a conventional manner.

Port 11 may be employed to provide access for another material such as a buffer to be applied to absorbent pad 13. The sample once added to port 3 contacts absorbent pad 15. The assembly of the backing strip and associated attached components may be positioned within a bottom portion 17 of the housing. The housing cover 1 includes view port 20 for viewing the visual result of the reaction between the sample and the reagent present in the device.

Figures 3 and 4 depict a lateral flow test strip according to the present invention. The test strip includes sample absorbent pad 19, membrane 21 and sample collection pad 23. Backing strip 25 includes a surface 27 which may be heat-sealable or pressure sensitive in nature in accordance with the present invention and which may be a MIP. Areas 29 on the membrane 21 contain reagents for reaction with the sample. Alternatively, the membrane may be omitted and its function served by a hydrophilic surface of the backing strip 25 if imprinted with a surfactant. In such an embodiment, the areas 29 may still contain reagents for reaction with the test sample, and areas 29 of the backing strip may also be made more hydrophobic (or less hydrophilic) than the remaining surface of the backing strip. The presence of such areas will serve to slow the rate of passage of the sample across the backing strip to maximize time of contact with the reagents in areas 29.

Another embodiment of the device of the present invention is depicted in Figure 5. The device of Figure 5 includes covers 31,33 for the respective ends of the device, which include sample pad 37 and collection pad 35, with test zones 41 being intermediate the ends of the device on backing strip 39 having an imprinted surface 43. As discussed above, test zones 41 may be positioned on portions of the backing strip which have been rendered less hydrophilic (or more hydrophobic) than the remaining portion of the backing strip, or which may be otherwise imprinted with a desired component.

Various modifications can be undertaken with advantage in such an embodiment. As discussed above, selective areas of hydrophilic/hydrophobic surface character can be provided on the surface of the backing material by molecular imprinting to modify the flow characteristics of the fluid sample, either by directing the sample longitudinally along the backing strip toward the fluid collection point, or by causing the fluid sample to contact adjacent hydrophilic/hydrophobic areas to slow the flow rate of the fluid sample along the backing strip. In such an instance, for example, the reagent may be placed on the hydrophobic portion where the wicking of the fluid sample would be slower to permit a longer contact time with between the fluid sample and the reagent. In terms of this discussion, the term hydrophobic is not intended to mean that the portion of the backing would be entirely hydrophobic, but could also mean that that the area is more hydrophobic than the adjacent hydrophilic portion of the backing strip (i.e., both portions would have varying degrees of hydrophilicity so that the wicking of the fluid sample would still be encouraged to travel from the sample inlet to the sample collection area).

Accordingly, in the context of Figures 3-6, the surface of the backing film (e.g. a polyester film as in Figure 1) could be rendered hydrophilic by molecular imprinting as discussed above, and employed as a heat-sealable layer for bonding to the absorbant pad and the sample pad/conjugate pad. Optionally, a membrane could also be bonded to the heat-sealable hydrophilic backing strip. Alternatively, the use of the membrane can be avoided and the reagents applied directly to the hydrophilic surface of the backing strip and the sample and reagent caused to wick directly across the surface of the backing strip toward the absorbent pad. Alternatively, the backing layer may be molecularly imprinted with other types of molecules as discussed above.

As discussed above, in an embodiment where the backing strip comprises a hydrophilic pressure sensitive adhesive layer, the membrane can still be used with advantage due to the hydrophilic character of the adhesive without fear of diminishment of the ability of the membrane to function due to migration of the adhesive. However, it is still possible to avoid the use of the membrane, with the hydrophilic adhesive layer serving as the transport medium for the sample from the sample pad to the absorbent pad. Any reagents desired to be contacted with the sample may be applied directly to the surface of the hydrophilic adhesive layer. The adhesive character of the backing strip can also be employed with advantage to bond the respective sample/conjugate/absorbent pads to the backing strip. This facilitates the manufacture of the device. Such a device would typically be contained in a suitable housing that generally includes a viewing window to determine the extent of the reaction of the sample and the reagent (e.g., to determine extent of reaction due to color formation or the intensity of the color formed).

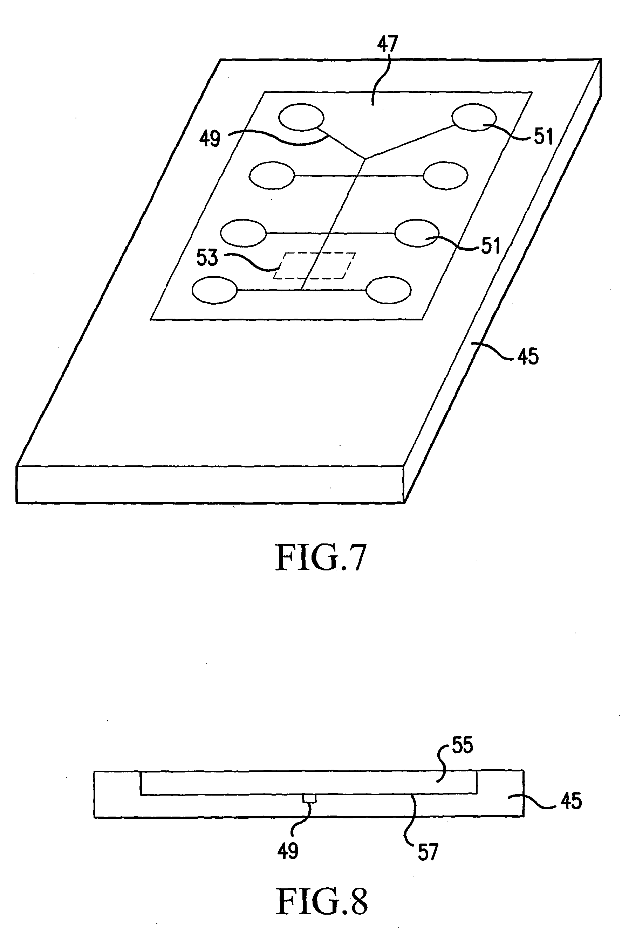

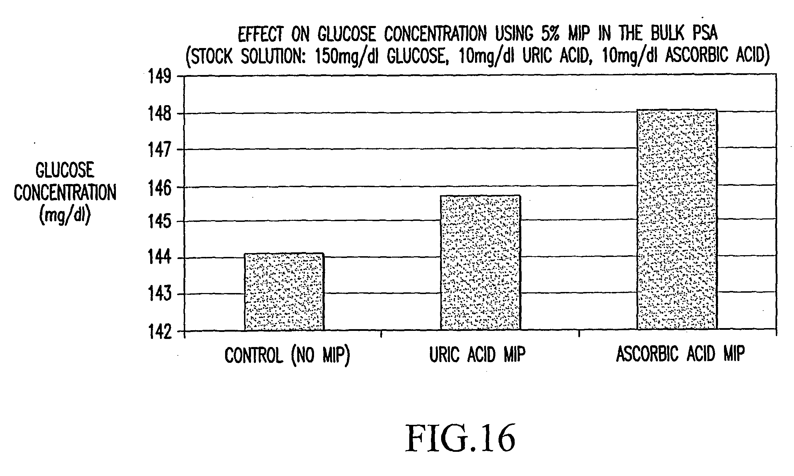

In the context of a microfluidic diagnostic device which employs capillary transport of the fluid sample during the analysis procedure, such devices typically include microfluidic channels molded in a suitable polymeric substrate (see Figures 7 and 16). Microfluidic devices generally refers to a device having one or more fluid channels, passages, chambers or conduits which have at least one internal cross-sectional dimension (width or depth) of between 0.1 um and 500 mm within which a fluid sample passes from an inlet port to a detection zone.

The microfluidic diagnostic device is generally comprised of a substantially planar base portion having one or more microfluidic channels, passages, chambers or conduits therein. A variety of materials may comprise the base portion, including polymeric materials such as polymethylmethacrylate, polycarbonate, polytetrafluoroethylene, polyvinylchloride, polydimethylsiloxane, polysulfone, and silica-based substrates such as glass, quartz, silicon and polysilicon, as well as other conventionally-employed substrate materials.

Such substrates are manufactured by conventional means, such as by injection molding, embossing or stamping, etc. The microfluidic passages or channels may be fabricated into the base portion by conventional microfabrication techniques known to those skilled in the art, including but not limited to photolithography, wet chemical etching, laser ablation, air abrasion techniques, injection molding, embossing, and other techniques. The base material is selected on the basis of compatibility with the desired method of manufacture as well as for compatibility with the anticipated exposure to materials and conditions, including extremes of pH, temperature, salt concentration, and the application of electric fields. The base material may also be selected for optional properties including clarity and spectral characteristics.

An enclosure surface or cover is placed over the top portion of the base substrate to enclose and otherwise seal the microfluidic passages or channels. In the context of the present invention, the channels or passages are covered with a substrate according to the present invention the surface of which is molecularly imprinted which covers the passages or channels in the base substrate. A surfactant imprinted cover can be used to enhance the flow of the liquid through the microfluidic passages and channels.

Such devices typically include optical detector means positioned adjacent to a detector window whereby the detector senses the presence or absence of an optical characteristic from within the microfluidic passage or channel resulting from flow of the liquid sample through the passage or sample. The optical detector may comprise any of a variety of detector means such as fluorescent, colorimetric or video detection systems, which include an excitation light source (laser or LED), etc. A variety of optically detectable labels can be employed to provide an optically detectable characteristic such as colored labels, colloid labels, fluorescent labels, spectral characteristics and chemiluminescent labels.

As discussed above, an alternative to otherwise having to ensure that the channels possess sufficient hydrophilicity to cause the fluid sample to travel along the capillary tube, the top portion of the channel is covered with a hydrophilic material which has been molecularly imprinted with a surfactant in accordance with the present invention. That is, a heat-sealable polymeric film having hydrophilic surface characteristics may be applied over the open cavity of the channel to both enclose the channel and provide the necessary hydrophilic character so that the fluid sample will be caused to wet the channel. As an alternative, the polymeric film may include a pressure sensitive adhesive coating which is also hydrophilic in character to provide the necessary hydrophilicity to cause the fluid sample to wet the channel by being molecularly imprinted with a surfactant. The use of such materials in the construction of the microfluidic diagnostic device also serves to simplify the manufacturing of the device. In the context of the present invention, the entire facing surface of the covering layer need not be hydrophilic; instead, only that portion of the covering layer that serves to enclose the microfluidic channels or passages is required to be hydrophilic. Of course, as is the case with lateral flow devices, certain portions of the covering layer that enclose the microfluidic channels or passages may be rendered less hydrophilic than other portions to modify the flow rate of the fluid sample.

A typical microfluidic device which has been prepared in accordance with the present invention is depicted at Figures 7 and 8. The device of Figure 7 includes base portion 45, recess 47 in the top of the base 45, open microfluidic channels 49, fluid reservoirs 51 and viewing window 53. In the device of Figure 7, the microfluidic channels 49 are uncovered in order to depict the interior of the device. In the cross-sectional view of the device of Figure 16 (at Figure 8), base portion 45 includes microfluidic channel 49 which is shown to be enclosed by cover portion 55. Cover portion 55 includes a facing molecularly imprinted surface 57 whereby the fluid sample which enters the microfluidic channel 49 will contact the facing surface and cause the sample to be transported along the length of the channel. The facing surface 57 of the cover 55 may be rendered hydrophilic in accordance with the present invention, such as by the presence of a hydrophilic pressure sensitive adhesive, by the rendering of the surface of the cover itself hydrophilic by molecularly imprinting. For example, cover 55 may be heat-sealed or adhesively attached to the interior portion of the base 45.

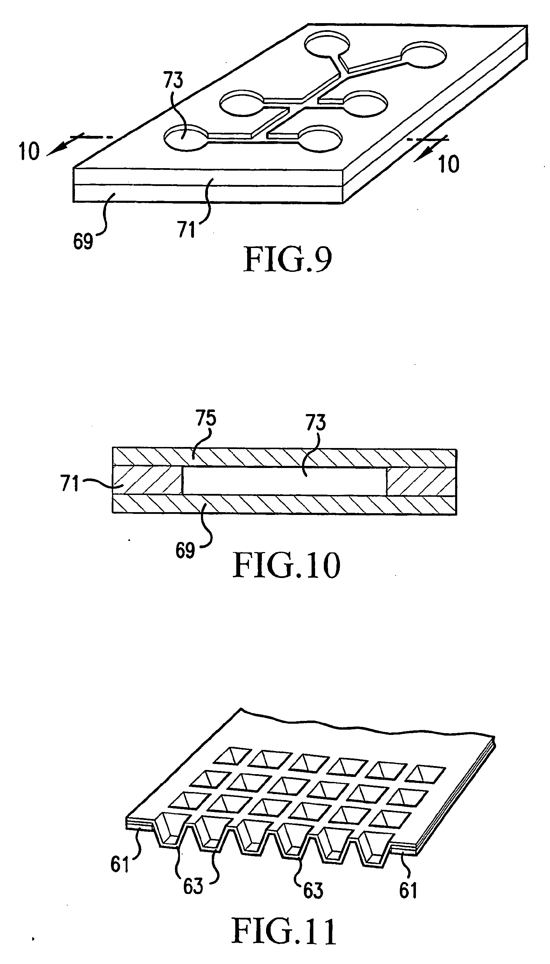

By way of an alternative embodiment depicted in Figures 9 and 10, the microfluidic in-vitro diagnostic device may be comprised of opposing base layers 69, 75 separated by an adhesive spacer layer 71. While only a single base layer is shown in Figure 9 so as to depict the fluid channels 73, both base layers are shown in Figure 10. The spacer layer 71 may have fluid channels 73 provided therein within which a fluid to be assayed passes from a reservoir to a collection point. At least a portion of the surfaces of the base layers 69, 75 and the spacer layer which define the boundaries of the fluid channels may be molecularly imprinted.

The spacer layer 71 preferably is an adhesive layer which is bonded to the opposing base layers, either as a result of pressure sensitive adhesive properties of the spacer layer or as a result of being heat-sealed to each of the base layers. If pressure sensitive, the spacer layer may be used in the form of a transfer film or as a double face construction. As discussed above, if the base layers are not hydrophilic in character, the spacer layer may possess the requisite hydrophilic character to assist wetting of the fluid channel by the fluid sample. The fluid channels 73 in the spacer layer may be die-cut into the spacer layer or provided by any other means effective to provide a spacer layer with the requisite fluid channels. One advantage of such a construction is that the micro-fluidic device may be constructed easily without the need to mold the fluid channels into the base layers as in the embodiment of Figure 7.

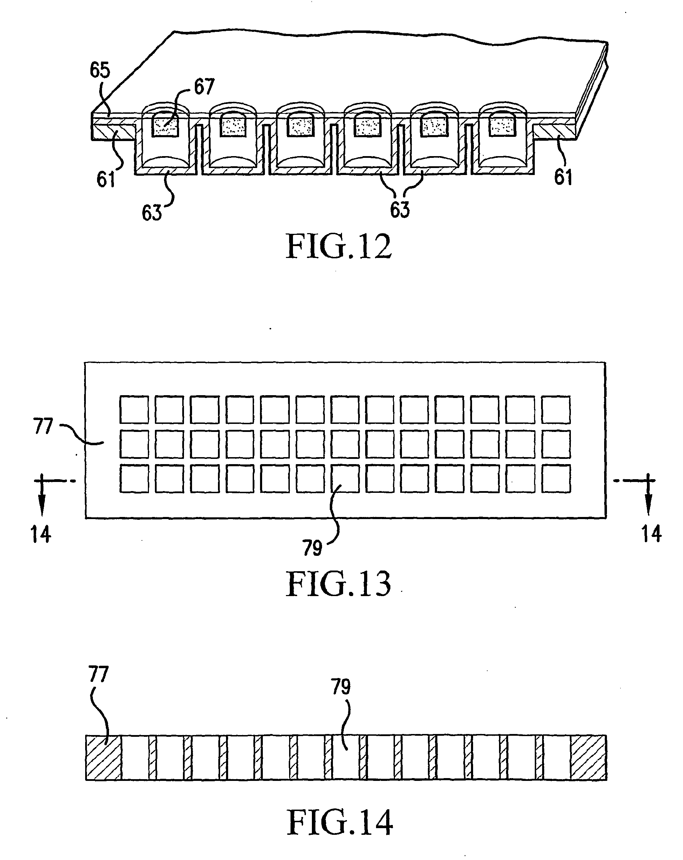

Microplates of the present invention include various embodiments such as microwell-containing microplate as shown in Figures 11 and 12. As shown in the Figures, the microplate includes base portion 61 within which are formed a multitude of microwells 63. The microwells 63 may be of any suitable configuration, such as hexagonal or cylindrical as depicted. Figure 11 depicts the presence of a cover plate or sheet 65 on the top of the base portion 61 to seal the microwells. The cover plate or sheet may comprise a molecularly imprinted heat-sealable film or may have pressure sensitive properties. As depicted in Figure 11, a suitable material such as a lyophilized substrate, etc. may, as desired, be attached to the inner surface of the cover plate or sheet in the event that the inner surface of the plate or sheet exhibits pressure sensitive adhesive properties, or by use of other adhesive means. In the context of the present invention, the cover plate or sheet, at least on the inner surface thereof which covers the microwells is molecularly imprinted. Such properties can be provided by use of a pressure sensitive adhesive, or by use of a heat sealable film in the manner taught above.

An alternative microplate embodiment is shown in Figures 13 and 14 which comprises an open well microplate having a base portion 77 containing a plurality of microholes 79 cut or molded therein and passing completely through the base portion 77. The base portion 77 would be provided with facing cover plates or layers in order to seal the respective microholes 79 so that the respective liquid samples may be placed therein. Either or both of the base portion or the cover portions (not shown) adjacent the holes may be molecularly imprinted. The covering plates or layers may be attached to the base plate by suitable adhesive means such as pressure sensitive adhesive or heat sealable adhesive properties of the cover plates or layers.

The present invention may employ a multitude of polymeric films which can be molecularly imprinted to provide desired properties. Polymers which can be modified in this manner are well known in the art. Exemplary of such polymers are the following polymers: polyolefins, including but not limited to polyethylene, polystyrene, polyvinyl chloride, polyvinyl acetate, polyvinylidene chloride, polyacrylic acid, polymethacrylic acid, polymethyl methacrylate, polyethyl acrylate, polyacrylamide, polyacrylonitrile, polypropylene, poly(1-butene), poly(2-butene), poly(1-pentene), poly(2-pentene), poly(3-methyl-1-pentene), poly(4-methyl-1-pentene), 1,2-poly-1;3-butadiene, 1,4-poly-1,3-butadiene, polyisoprene, polychloroprene, ethylene-vinyl acetate copolymer, polycarbonate, ethylene-isobutyl acrylate copolymer, as well as random or block copolymers of two or more polyolefins or a polyolefin and a non-olefin. Similarly, blends of two or more polymers may also be employed.

The polymer may also comprise a polyester such as polyethylene terephthalate, polyethylene isophthalate-terephthalate, copolymers of poly-(1,4-cyclohexane dimethylene)terephthalate, poly(1,4-cyclohexane dimethylene) isophthalate, and isophthalate-terephthalate copolymers; poly(1,4 phenylene) terephthalate and isophthalate and copolymers; poly(1,4-phenylene)-4,4' diphenyl dicarboxylate; polyesters derived from aliphatic dibasic acids, such as maleic, adipic and sebacic acids and polyhydroxy compounds such as polyethylene glycol, neopentyl glycol, butylene glycol, glycerol, pentaerythritol, and cellulose. Preferably, the film-forming polymers used in the present invention exhibit a Tg or Tc sufficient to permit the polymer to be film-forming as well as to enable the resulting polymer film to be heat sealable at a sufficiently low temperature (e.g., in the range of from 70 to 100°C.).

A variety of surfactants may be used to molecularly imprint the polymer. Surfactants which are suitable for use in the present invention include any surfactant which effectively imparts hydrophilic surface properties to the hydrophobic polymer film. While the identity of such surfactants is not critical to the practice of the present invention, anionic surfactants are preferred. However, exemplary of such surfactants (without limitation) are ammonium salts or sodium salts of alkyl phenoxy (polyethylene oxy) ethanol, ammonium perfluoroalkyl sulfonates, etc. Exemplary surfactants preferably include one or more hydroxyl, carboxylic acid, sulfonic acid, and amine functionalities. A detailed discussion of surfactants resides in Kirk-Othmer, Encyclopedia of Chemical Technologies, 2nd Edition, Vol. 19, pages 512-564, herein incorporated by reference.

The surfactant may be admixed in an amount of, for example, up to about 15% by weight, based on the total weight of the polymer and surfactant, such as in an amount of from 0.05 to 15% by weight. Preferably, the surfactant is admixed with the polymer in an amount in the range of from about 3 to 6% by weight.

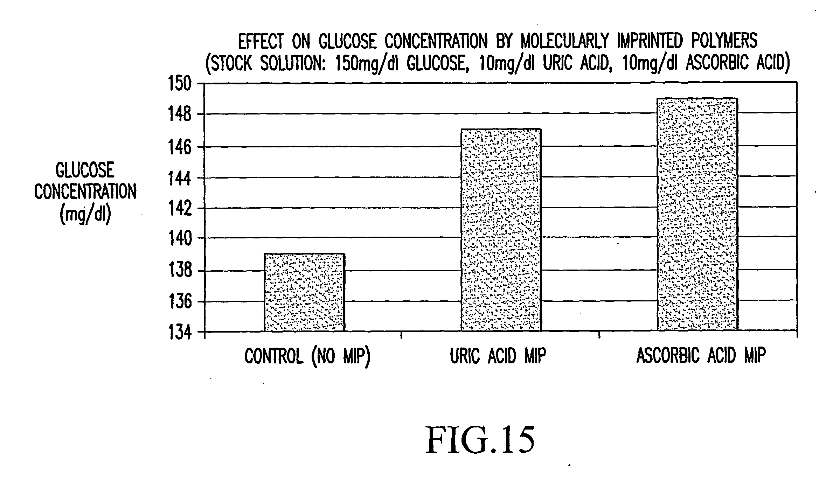

It is thus apparent that a molecularly imprinted adhesive may be used with advantage in the above-described devices by providing a surface which includes, for example, a molecularly imprinted surfactant to provide enhanced hydrophilic surface properties, a molecularly imprinted adhesive surface which is imprinted to collect a specific interferent(s) from a liquid to be analyzed, or a molecularly imprinted adhesive surface to collect a specific component(s) for which an analysis is to be made. Advantageously, the molecular imprinted properties of the adhesive layer can easily be tailored to meet the desired end result consistent with the objects of the present invention. Figures 15-17 demonstrate the advantages of practice of the present invention in this regard.

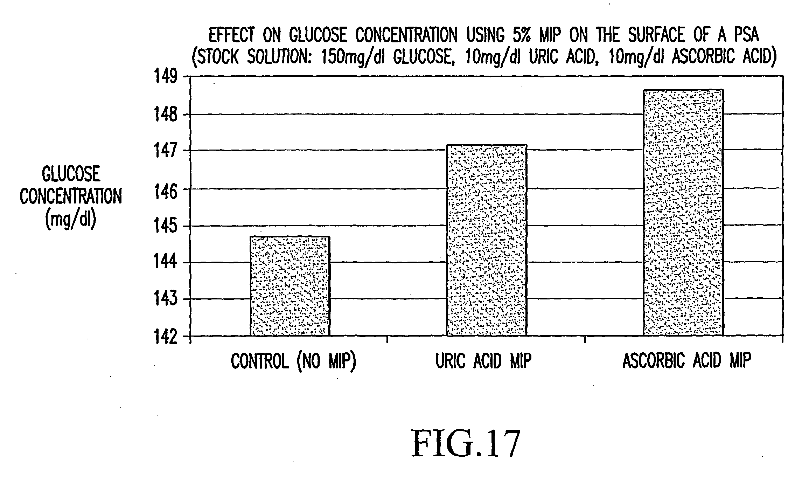

Figure 15 is a graphical depiction of the effect on determined glucose concentration using a MIP imprinted for uric acid and ascorbic acid. Figure 16 is a graphical depiction of the effect on determined glucose concentration using 5% by weight of MIPs imprinted for uric acid and ascorbic acid in the bulk of a pressure sensitive adhesive. Figure 17 is a graphical depiction of the effect on determined glucose concentration using 5% by weight of MIPs imprinted for uric acid and ascorbic acid on the surface of a pressure sensitive adhesive.

With respect to the "bulk" embodiment, the concentration ofMIP is 5% in the bulk of the adhesive. 5% by weight of the MIP to adhesive solids is mixed into the adhesive solution prior to coating the adhesive onto a carrier film.

With respect to the "surface" embodiment, the concentration of MIP is 5% on the surface of the adhesive by suspending 5% by weight of MIP to adhesive solids in a solvent and coating the suspension onto a release film. The adhesive solution is coated onto a carrier film, and after drying and curing, the adhesive film is laminated onto the surface of the MIP coated liner. Alternatively, the adhesive may be directed coated on top of the MIP coated liner. Alternatively, the MIP suspension may be directly coated or sprayed onto the top of the adhesive coating.

The results of Figures 15-17 confirm that the removal of uric acid and/or ascorbic acid from a fluid to be analyzed for glucose enables the sensitivity of the glucose analysis to be significantly enhanced.

For instance, Figure 15 demonstrates that the efficiency of glucose determination increases from 92.7% for the control test (no MIP) to 98% for a uric acid imprinted MIP, and to 99.3% for an ascorbic acid imprinted MIP.

Figure 16 demonstrates that the efficiency of glucose determination increases from 96% for the control test (no MIP) to 97.1% for a uric acid imprinted MIP, and to 98.7% for an ascorbic acid imprinted MIP.

Figure 17 demonstrates that the efficiency of glucose determination increases from 96.5% for the control test (no MIP) to 98.1 % for a uric acid imprinted MIP, and to 99.1 % for an ascorbic acid imprinted MIP.

It is accordingly an advantage of practice of the present invention to provide a method for the analysis of a liquid sample whereby significantly increased efficiency of analysis can be achieved by use of a molecularly imprinted polymer having been imprinted with an interferent present in the liquid sample is used to accomplish the analysis.

By way of further explanation of Figures 15-17, an aqueous stock solution containing 150 mg/dl glucose, 10 mg/dl uric acid and 10 mg/dl ascorbic acid was prepared. The glucose is assayed according to the method described in Example 4 using the Glucose G2 Autokit Glucose kit from WAKO Chemicals USA, Inc. Referencing Figure 15, 5 grams of non-imprinted polymer (Control) was mixed for 1 minute with 100 grams of stock solution. A 0.2 mil aliquot sample was taken from the mixture and analyzed for glucose. A value of 139 mg/dl glucose was found which indicates that the presence of uric acid and ascorbic acid reduce the accuracy of the glucose measurement. When this experiment was repeated using a MIP imprinted with uric acid a glucose value of 147 mg/dl was measured. Similarly, the experiment was repeated using the MIP imprinted with ascorbic acid and a glucose value of 149 mg/dl was measured. These results indicate that the MIPs for uric acid and ascorbic acid reduce the effect of interfering compounds and increase the accuracy of the glucose measurement.

Referring to Figure 16, a tubular fluidic channel was created using an adhesive coating containing 5% non-imprinted polymer in the bulk adhesive (control). One ml of the above stock solution was passed through the adhesive then collected for glucose analysis according to the Glucose G2 Autokit. A glucose value of 144.1 mg/dl was measured in the eluted fluid. This experiment was repeated using an adhesive containing 5% uric acid imprinted MIP in the bulk adhesive. A glucose value of 145.7 mg/dl was measured. Similarly, the experiment was repeated using an adhesive containing 5% ascorbic acid imprinted MIP in the bulk adhesive. A glucose value of 148.0 mg/dl was measured. These results show adhesives containing MIPs for uric acid and ascorbic acid used as fluidic channels increase the accuracy of glucose measurement.

Referring to Figure 17, similar to the experiments for Figure 16, tubular fluidic channels were created using adhesives containing 5% imprinted polymers on the surface of the adhesive. The glucose concentration in a control with a non-imprinted polymer on the surface of the adhesive was 144.7 mg/dl. Using the uric acid imprinted MIP on the adhesive surface gave a glucose concentration of 147.1 mg/dl. The ascorbic acid imprinted MIP on the adhesive surface gave a glucose concentration of 148.6 mg/dl. These results illustrate the increase in glucose accuracy using adhesives containing MIPs imprinted to remove interfering components. The molecularly imprinted polymer may be in the bulk of the adhesive or on the surface. It is expected that the combination of two or more MIPs into one adhesive to remove multiple interfering compounds would provide advantages in many assays.

## Claims

1. An adhesive comprising at least one molecularly imprinted cross-linked polymer.

2. An adhesive of claim 1, comprising multiple molecularly imprinted polymers.

3. An adhesive of claim 1 or claim 2, wherein a molecularly imprinted polymer contains imprint sites for one or more target compounds.

4. An adhesive of any one of the preceding claims, wherein said adhesive is a pressure sensitive adhesive.

5. An adhesive of any one of claims 1 to 3, wherein said adhesive is a heat seal adhesive.

6. An adhesive of the preceding claims, wherein said polymer is imprinted with a surfactant.

7. An adhesive of claim 1, wherein said polymer is imprinted with a blood-borne component.

8. An adhesive of claim 7, wherein said polymer is imprinted with at least one of uric acid, acetaminophen or ascorbic acid.

9. An adhesive of any one of claims 1 to 5, wherein said polymer is imprinted with uric acid and/or ascorbic acid.

10. An adhesive of any one of claims 1 to 5, wherein said polymer is imprinted with glucose.

11. An adhesive of any one of the preceding claims, wherein said molecularly imprinted polymer is present in said adhesive in the form of a powder as an admixture therewith.

12. An adhesive of any one of claims 1 to 10, wherein said molecularly imprinted polymer is present on a surface of said adhesive.

13. A method of making an adhesive as defined in any one of the preceding claims comprising the steps of providing the requisite polymerizable monomers to form the desired polymer which is to be molecularly imprinted, combining said polymerizable monomers with a component adapted to imprint said polymer and being compatible with said monomers, copolymerizing and cross-linking said polymerizable monomers to form an imprinted polymer in admixture with said component adapted to imprint said polymer, and combining said molecularly imprinted cross-linked polymer with an adhesive.

14. A lateral flow in-vitro diagnostic device comprising a housing, means in the housing to introduce a sample to be assayed in said device, means in said housing for fluid collection, and a backing strip having spaced apart first and second ends, wherein said backing strip is comprised of an adhesive as defined in any one of Claims 1 to 12.

15. A lateral flow device of claim 14, further comprising a microporous or porous membrane attached to said backing strip between said first and second ends.

16. A microfluidic in-vitro diagnostic device comprised of a base having at least one fluid channel within which a fluid sample to be assayed passes from an inlet port to a detection zone, wherein said at least one fluid channel is enclosed by at least one enclosure surface wherein at least one surface of the fluid channel is comprised of an adhesive comprising a molecularly imprinted cross-linked polymer.

17. A microfluidic device of claim 16, wherein said at least one enclosure surface is heat-sealed to said base to seal said at least one fluid channel.

18. A microfluidic device of claim 16, wherein the surface of said at least one enclosure surface facing said at least one fluid channel exhibits pressure sensitive adhesive properties.

19. A microfluidic device of claim 17, wherein the surface of said at least one enclosure surface facing said at least one fluid channel is molecularly imprinted with a surfactant.

20. A microfluidic device of claim 17, wherein said fluid channels are die-cut into said adhesive layer.

21. An in-vitro diagnostic device comprised of a microplate having a base plate having formed therein a multitude of microholes or cavities and at least one cover placed in sealing relationship to said microholes or cavities, wherein a surface of at least said cover which seals said microholes or cavities is comprised of an adhesive comprising a molecularly imprinted cross-linked polymer.

22. A diagnostic device of claim 21, wherein said at least one cover portion is heat- sealed to said base to seal said microholes or cavities.

23. A diagnostic device of claim 21, wherein the surface of said at least one cover facing said microholes or cavities exhibits pressure sensitive adhesive properties.

24. A diagnostic device of claim 21, wherein the surface of said at least one cover facing said microholes or cavities is molecularly imprinted with a surfactant.

25. A method of conducting an analysis of a liquid sample containing a component to be analyzed as to identity and/or amount comprising contacting said liquid sample with an adhesive comprising a cross-linked polymer having been imprinted with said component and, and conducting said analysis based on the amount of said component absorbed by said polymer having previously been imprinted with said component.

26. A method of claim 25, wherein said polymer is as defined in any one of claims 2 to 10.

## Patentansprüche

1. Kleber umfassend wenigstens ein molekular geprägtes vernetztes Polymer.

2. Kleber nach Anspruch 1, der mehrere molekular geprägte Polymere aufweist.

3. Kleber nach Anspruch 1 oder 2, bei dem ein molekular geprägtes Polymer Prägungsstellen für eine oder mehrere Zielkomponenten aufweist.

4. Kleber nach wenigstens einem der vorhergehenden Ansprüche, wobei der Kleber ein drucksensitiver Kleber ist.

5. Kleber nach einem wenigstens einem der Ansprüche 1 bis 3, wobei der Kleber ein Heißkleber ist.

6. Kleber nach einem der vorhergehenden Ansprüche, wobei das Polymer mit einem oberflächenaktiven Stoff geprägt ist.

7. Kleber nach Anspruch 1, wobei das Polymer mit einer von Blut übertragenen Komponente geprägt ist.

8. Kleber nach Anspruch 7, wobei das Polymer mit wenigstens einer der Komponenten Harnsäure, Acetaminophen (Paracetamol) oder Ascorbinsäure geprägt ist.

9. Kleber nach wenigstens einem der Ansprüche 1 bis 5, wobei das Polymer mit Harnsäure und/oder Ascorbinsäure geprägt ist.

10. Kleber nach wenigstens einem der Ansprüche 1 bis 5, wobei das Polymer mit Glukose geprägt ist.

11. Kleber nach einem der vorhergehenden Ansprüche, wobei das molekular geprägte Polymer in Form eines Pulvers als Beimischung im Kleber enthalten ist.

12. Kleber nach wenigstens einem der Ansprüche 1 bis 10, wobei das molekular geprägte Polymer an der Oberfläche des Klebers vorhanden ist.

13. Verfahren zur Herstellung eines in wenigstens einem der vorhergehenden Ansprüche definierten Klebers, umfassend die Schritte der Bereitstellung der erforderlichen polymerisierbaren Monomere zur Bildung des gewünschten molekular geprägten Polymers, durch Kombination der polymerisierbaren Monomere mit einer zur Prägung des Polymers geeigneten und mit den Monomeren kompatiblen Komponente, durch Copolymerisation und Vernetzung der polymerisierbaren Monomere zur Bildung eines geprägten Polymers als Beimischung mit besagter, zur Prägung des Polymers geeigneten Komponente, und durch Kombination des molekular geprägten vernetzten Polymers mit einem Kleber.

14. Lateral-Flow-in-vitro-Diagnoseeinrichtung umfassend ein Gehäuse, im Gehäuse angeordnete Mittel zur Einführung einer in der Einrichtung zu untersuchenden Probe, und eine Trägerleiste mit voneinander beabstandeten ersten und zweiten Enden, wobei die Trägerleiste von einem Kleber umfasst ist, wie er in einem der Ansprüche 1 bis 12 definiert ist.

15. Lateral-Flow-Einrichtung nach Anspruch 14, die weiterhin eine mikroporöse oder poröse Membran umfasst, die an der Trägerleiste zwischen dem ersten und dem zweiten Ende befestigt ist.

16. Mikrofluid-in-vitro-Diagnoseeinrichtung umfassend ein Basisteil, das wenigstens einen Fluidkanal aufweist, in dem eine zu untersuchende flüssige Probe von einer Einlass-Öffnung zu einer Detektierungszone fließt, wobei der wenigstens eine Fluidkanal von wenigstens einer umgebenden Oberfläche umgeben ist, wobei wenigstens eine Oberfläche des Fluidkanals von wenigstens einem Kleber umfasst ist, der ein molekular geprägtes vernetztes Polymer aufweist.

17. Mikrofluid-Einrichtung nach Anspruch 16, worin die Oberfläche der wenigstens einen umgebenden Oberfläche zur Abdichtung des Fluidkanals mit dem Basisteil durch Heißkleben verbunden ist.

18. Mikrofluid-Einrichtung nach Anspruch 16, worin die dem Fluidkanal zugewandte Oberfläche der wenigstens einen umgebenden Oberfläche drucksensitive Kleber-Eigenschaften aufweist.

19. Mikrofluid-Einrichtung nach Anspruch 17, worin dem Fluidkanal zugewandte Oberfläche der wenigstens einen umgebenden Oberfläche mit einem oberflächenaktiven Stoff molekular geprägt ist.

20. Mikrofluid-Einrichtung nach Anspruch 17, worin die Fluidkanäle in die Kleberfläche eingestanzt sind.

21. In-vitro-Diagnoseeinrichtung gebildet von einer Mikroplatte mit einer Basisplatte, in der eine Vielzahl von Mikroöffnungen oder Höhlen ausgebildet sind und mit wenigstens einer in dichtender Beziehung zu den Mikroöffnungen oder Höhlen platzierten Abdeckung, wobei eine die Mikroöffnungen oder Höhlen abdichtende Oberfläche der wenigstens einen Abdeckung einen Kleber umfasst, der ein molekular geprägtes vernetztes Polymer aufweist.

22. Diagnoseeinrichtung nach Anspruch 21, wobei das Abdeckungsteil zur Abdichtung der Mikroöffnungen oder Höhlen mit dem Basisteil durch Heißkleben verbunden ist.

23. Diagnoseeinrichtung nach Anspruch 21, wobei die den Mikroöffnungen oder Höhlen zugewandte Oberfläche des Abdeckungsteils drucksensitive Kleber-Eigenschaften aufweist.

24. Diagnoseeinrichtung nach Anspruch 21, wobei die den Mikroöffnungen oder Höhlen zugewandte Oberfläche des Abdeckungsteils mit einem oberflächenaktiven Stoff molekular geprägt ist.

25. Verfahren zur Durchführung einer Analyse einer flüssigen Probe mit einer bezüglich des Vorhandenseins und/oder der Menge zu untersuchenden Komponente durch in Kontakt bringen der flüssigen Probe mit einem Kleber, der ein vernetztes, mit der Komponente geprägtes Polymer aufweist, und Durchführung der Analyse basierend auf der vom zuvor mit der Komponente geprägten Polymer absorbierten Menge der Komponente.

26. Verfahren nach Anspruch 25, wobei das Polymer dem in einem der Ansprüche 2 bis 10 definierten entspricht.

## Revendications

1. Adhésif comprenant au moins un polymère réticulé à empreinte moléculaire.

2. Adhésif selon la revendication 1, comprenant de multiples polymères à empreinte moléculaire.

3. Adhésif selon la revendication 1 ou la revendication 2, dans lequel un polymère à empreinte moléculaire contient des sites à empreinte pour un ou plusieurs composés cibles.

4. Adhésif selon l'une quelconque des revendications précédentes, dans lequel ledit adhésif est un adhésif sensible à la pression.

5. Adhésif selon l'une quelconque des revendications 1 à 3, dans lequel ledit adhésif est un adhésif thermoscellable.

6. Adhésif selon les revendications précédentes, dans lequel ledit polymère est imprimé avec un tensioactif.

7. Adhésif selon la revendication 1, dans lequel ledit polymère est imprimé avec un composant porté par le sang.

8. Adhésif selon la revendication 7, dans lequel ledit polymère est imprimé avec au moins un composant choisi parmi l'acide urique, l'acétaminophène et l'acide ascorbique.

9. Adhésif selon l'une quelconque des revendications 1 à 5, dans lequel ledit polymère est imprimé avec de l'acide urique et/ou de l'acide ascorbique.

10. Adhésif selon l'une quelconque des revendications 1 à 5, dans lequel ledit polymère est imprimé avec du glucose.

11. Adhésif selon l'une quelconque des revendications précédentes, dans lequel ledit polymère à empreinte moléculaire est présent dans ledit adhésif sous la forme d'une poudre en mélange avec celui-ci.

12. Adhésif selon l'une quelconque des revendications 1 à 10, dans lequel ledit polymère à empreinte moléculaire est présent sur une surface dudit adhésif.

13. Procédé de préparation d'un adhésif tel que défini dans l'une quelconque des revendications précédentes, comprenant les étapes d'obtention des monomères polymérisables nécessaires pour former le polymère souhaité qui doit recevoir des empreintes moléculaires, de combinaison desdits monomères polymérisables avec un composant adapter à l'impression dudit polymère et compatible avec lesdits monomères, de copolymérisation et de réticulation desdits monomères polymérisables pour former un polymère à empreinte en mélange avec ledit composant adapté à l'impression dudit polymère, et de combinaison dudit polymère réticulé à empreinte moléculaire avec un adhésif.

14. Dispositif de diagnostic *in vitro* à écoulement latéral, comprenant un logement, un moyen dans le logement pour introduire un échantillon à tester dans ledit dispositif, un moyen dans ledit logement pour collecter un fluide et une bande de fond ayant une première extrémité et une seconde extrémité séparées l'une de l'autre, ladite bande de fond étant composée d'un adhésif tel que défini dans l'une quelconque des revendications 1 à 12.

15. Dispositif à écoulement latéral selon la revendication 14, comprenant en outre une membrane microporeuse ou poreuse fixée à ladite bande de fond entre ladite première extrémité et ladite seconde extrémité.

16. Dispositif microfluidique de diagnostic *in vitro*, comprenant une base dotée d'au moins un canal à fluide à l'intérieur duquel un échantillon fluide à tester passe à partir d'un orifice d'entrée vers une zone de détection, dans lequel ledit au moins un canal à fluide est entouré par au moins une surface d'enceinte dans laquelle au moins une surface du canal à fluide est composée d'un adhésif comprenant un polymère réticulé à empreinte moléculaire.

17. Dispositif microfluidique selon la revendication 16, dans lequel ladite au moins une surface d'enceinte est thermoscellée à ladite base pour sceller ledit au moins un canal à fluide.

18. Dispositif microfluidique selon la revendication 16, dans lequel la surface de ladite au moins une surface d'enceinte se trouvant en face dudit au moins un canal à fluide présente des propriétés d'adhésif sensible à la pression.

19. Dispositif microfluidique selon la revendication 17, dans lequel la surface de ladite au moins une surface d'enceinte se trouvant en face dudit au moins un canal à fluide possède des empreintes moléculaires d'un surfactant.

20. Dispositif microfluidique selon la revendication 17, dans lequel lesdits canaux à fluide sont découpés à l'emporte-pièce dans ladite couche adhésive.

21. Dispositif de diagnostic *in vitro,* comprenant une microplaque présentant une plaque de base présentant, formée à l'intérieur de celui-ci, une multitude de microtrous ou cavité et au moins un couvercle placé en relation d'étanchéité sur lesdits microtrous ou cavités, dans lequel une surface dudit au moins un couvercle qui scelle lesdits microtrous ou lesdites cavités est composée d'un adhésif comprenant un polymère réticulé à empreinte moléculaire.

22. Dispositif de diagnostic selon la revendication 21, dans lequel ladite au moins une partie de couvercle est thermoscellée à ladite base pour sceller lesdits microtrous ou cavités.

23. Dispositif de diagnostic selon la revendication 21, dans lequel la surface dudit au moins un couvercle se trouvant en face desdits microtrous ou cavités présente des propriétés d'adhésif sensible à la pression.

24. Dispositif de diagnostic selon la revendication 21, dans lequel la surface dudit au moins un couvercle se trouvant en face desdits microtrous ou cavités possède des empreintes moléculaires d'un tensioactif.

25. Procédé de mise en oeuvre d'une analyse d'un échantillon liquide contenant un composant à analyser pour déterminer son identité et/ou sa quantité, comprenant le contact dudit échantillon liquide avec un adhésif comprenant un polymère réticulé ayant été imprimé avec ledit composant et la mise en oeuvre de ladite analyse sur la base de la quantité dudit composant absorbé par ledit polymère ayant été préalablement imprimé avec ledit composant.

26. Procédé selon la revendication 25, dans lequel ledit polymère est tel que défini dans l'une quelconque des revendications 2 à 10.
